# EUROPÄISCHE PATENTSCHRIFT

(11) **EP 3 423 232 B1**
(45) Veröffentlichungstag und Bekanntmachung des Hinweises auf die Patenterteilung: **13.10.2021**
(21) Anmeldenummer: 17708517.2
(22) Anmeldetag: 03.03.2017
(51) Int. Cl.: B23Q 3/08, B23Q 11/00, B23D 59/00, B27B 5/22

(54) **VORRICHTUNG MIT ABSAUGEINRICHTUNG**
APPARATUS WITH EXTRACTION DEVICE
DISPOSITIF DOTÉ D'UN SYSTÈME D'ASPIRATION

(30) Priorität: 04.03.2016 DE 102016203578
(43) Veröffentlichungstag der Anmeldung: 09.01.2019
(73) Patentinhaber: HOMAG GmbH, 72296 Schopfloch (DE)
(72) Erfinder: WINNEY, Stephen, 72250 Freudenstadt (DE)
(74) Vertreter: Hoffmann Eitle
(86) Internationale Anmeldenummer: PCT/EP2017/055035
(87) Internationale Veröffentlichungsnummer: WO 2017/149133

(56) Entgegenhaltungen:
- EP-A1- 1 721 724
- JP-A- S58 160 035
- JP-A- S62 162 441

## Beschreibung

### Technisches Gebiet

Die vorliegende Erfindung betrifft eine Vorrichtung zum spanenden Bearbeiten von Werkstücken mit einer Absaugeinrichtung. Eine derartige Vorrichtung wird insbesondere zur Herstellung von Werkstücken oder Bauteilen aus dem Bereich der Möbel- und Bauelementeindustrie verwendet.

### Stand der Technik

Als Stand der Technik ist z.B. die DE 197 27 361 A1 bekannt, in der eine Fördervorrichtung mit variabler Transportgeschwindigkeit, mit einer Anzahl von parallelen Transportriemen, Antriebs- und Umlenkrollen zur Aufnahme der Transportriemen sowie wenigstens einem Motor zum Antreiben wenigstens einer der Rollen, beschrieben wird. Die beschriebene Fördervorrichtung ist insbesondere dadurch gekennzeichnet, dass sie einen Saugkasten mit einer Deckplatte aufweist, in welcher die Transportriemen derart in Nuten geführt sind, dass die Transportriemen etwas über die Deckplatte vorstehen, so dass diese eine Förderfläche für das zu fördernde Fördergut bilden. Ferner weist der Saugkasten Ansaugöffnungen auf, anhand welcher das Fördergut angesaugt und somit ein Anpressdruck des Förderguts an die Transportriemen erhöht werden kann. Durch den erhöhten Anpressdruck zwischen Transportriemen und Fördergut kann eine kraftschlüssige Verbindung zwischen Fördergut und Transportriemen hergestellt werden, wodurch das Fördergut mit einer exakten Transportgeschwindigkeit zuverlässig transportiert werden kann. Durch den erhöhten Anpressdruck ist es ferner ermöglicht, dass Fördergut auf Förderstrecken mit Steigungen bzw. Gefällen zu transportieren.

Ferner beschreibt die EP 1 721 724 A1 eine Vorrichtung zur Bearbeitung einer umgeformten Thermoplastplatte. Die beschriebene Vorrichtung weist eine

Bearbeitungsvorrichtung mit einem Werkzeug zur spanenden Bearbeitung der Werkstücke auf, eine Absaugeinrichtung zum Absaugen von bei der spanenden Bearbeitung anfallenden Spänen, einen Ansaugbereich zum Ansaugen der Werkstücke während der spanenden Bearbeitung und einen Unterdruckschnittstellenbereich für eine Unterdruckeinrichtung. Des Weiteren beschreibt die JP S62-162441 A eine Vorrichtung, die einen Roboter, eine visuelle Erfassungsvorrichtung und eine Bohreinheit umfasst, wobei in einem Gehäuse, auf dem ein zu bearbeitendes Werkstück aufliegt, ein Unterdruck erzeugt wird und mittels des Unterdrucks das Werkstück an das Gehäuse angesaugt wird. Ferner weist das Gehäuse Späneabführbohrungen auf, die dazu dienen, während der Bearbeitung anfallende Späne durch den Unterdruck im Gehäuse abzuführen.

### Gegenstand der Erfindung

Eine Aufgabe der vorliegenden Erfindung ist es, eine Vorrichtung und ein Verfahren zum spanenden Bearbeiten bereitzustellen, die eine sichere Bearbeitung von Werkstücken sowie eine gleichzeitige Absaugung von bei der Bearbeitung anfallenden Spänen oder dergleichen gewährleisten.

Diese Aufgabe wird durch eine Vorrichtung zum spanenden Bearbeiten von Werkstücken gemäß Anspruch 1 sowie einem Verfahren zum spanenden Bearbeiten gemäß Anspruch 15 gelöst.

Einer der Kerngedanken der vorliegenden Erfindung ist es, eine Vorrichtung zum spanenden Bearbeiten von Werkstücken bereitzustellen, bei der die bei der spanenden Bearbeitung anfallenden Späne zeitnah durch eine Absaugeinrichtung abgesaugt werden, und ferner ein Ansaugen der zu bearbeitenden Werkstücke in einem definierten Ansaugbereich erfolgt, wobei die Absaugeinrichtung und der Ansaugbereich anhand einer gemeinsamen Unterdruckvorrichtung mit Unterdruck versorgt werden können.

Die in Anspruch 1 beschriebene Vorrichtung umfasst einen Unterdruckschnittstellenbereich, insbesondere einen Anschlussabschnitt, für eine Unterdruckvorrichtung, welcher Unterdruckschnittstellenbereich mit der Absaugeinrichtung und dem Ansaugbereich insbesondere fluidmäßig in Verbindung steht, um den Absaugbereich und den Ansaugbereich mit Unterdruck zu versorgen.

Die Absaugeinrichtung und der Ansaugbereich können somit fluidmäßig mit einer Unterdruckeinrichtung in Verbindung stehen oder gebracht werden. Die erfindungsgemäße Vorrichtung kann hierzu die Unterdruckvorrichtung umfassen. Alternativ kann die Unterdruckvorrichtung getrennt von der erfindungsgemäßen Vorrichtung vorgesehen sein.

Insbesondere kann die Unterdruckvorrichtung gemäß einer Ausführungsform in der Vorrichtung integriert sein (beispielsweise innerhalb eines Gehäuses der Vorrichtung). Der Unterdruckschnittstellenbereich ist in diesem Fall innerhalb der Vorrichtung angeordnet, beispielsweise als Anschlussabschnitt innerhalb der Vorrichtung, oder wird durch einen Ausgang bzw. eine Öffnung der Unterdruckvorrichtung ausgebildet. Auf diese Weise wird eine besonders kompakte Bauweise bereitgestellt.

Gemäß einer weiteren Ausführungsform kann die Unterdruckvorrichtung außerhalb der Vorrichtung an dieser angebracht sein (beispielsweise an einem Gehäuse der Vorrichtung). Somit ist die Unterdruckvorrichtung für Wartungsarbeiten in vorteilhafter Weise zugänglich.

Ferner kann die Unterdruckvorrichtung auch getrennt von der erfindungsgemäßen Vorrichtung vorgesehen sein. Beispielsweise handelt es sich um eine nahe der erfindungsgemäßen Vorrichtung angeordnete Unterdruckvorrichtung oder um ein Unterdruckversorgungssystem, welches von mehreren Vorrichtungen genutzt werden kann. In diesem Fall ist der Unterdruckschnittstellenbereich bspw. als Anschlussabschnitt am Gehäuse der Vorrichtung vorgesehen. Eine getrennte Unterdruckvorrichtung hat den Vorteil, dass die erfindungsgemäße Vorrichtung separat von dieser bewegt werden kann.

In einer weiteren Ausführungsform können mehrere Unterdruckeinheiten die Unterdruckeinrichtung ausbilden, um gemeinsam einen Unterdruck zu erzeugen.

Mittels der vorgeschlagenen Vorrichtung können die zu bearbeitenden Werkstücke während der spanenden Bearbeitung sicher gehalten bzw. sicher geführt werden, wodurch eine maßgenaue Bearbeitung gewährleistet und ferner der Bearbeitungsvorgang erleichtert werden kann. Ferner können mittels der vorgesehenen Absaugeinrichtung anfallende Abfälle wie Späne/ Staub umgehend abgesaugt werden, womit eine Verschmutzung des Arbeitsraums, insbesondere eine Verschmutzung des Absaugbereichs, vermieden werden kann.

Erfindungsgemäß weist die Vorrichtung ferner eine Fördervorrichtung mit einer Förderstrecke auf, mit der die Werkstücke insbesondere horizontal transportiert werden können und die zumindest mit einer Transporteinrichtung versehen ist. Des Weiteren ist die Bearbeitungsvorrichtung im Bereich der Förderstrecke angeordnet, und anhand des Ansaugbereichs werden die Werkstücke in Richtung der zumindest einen Transporteinrichtung angesaugt.

Auf diese Weise kann der Anpressdruck der zu bearbeitenden Werkstücke auf die Transporteinrichtung erhöht werden, womit zwischen der Transporteinrichtung und dem einzelnen Werkstück eine kraftschlüssige Verbindung hergestellt werden kann, wodurch das Werkstück mit einer exakten Transportgeschwindigkeit und hohen Positionsgenauigkeit transportiert werden kann, da kein Schlupf zwischen Transporteinrichtung und Werkstück auftritt. Ferner kann durch die erfindungsgemäße Vorrichtung vermieden werden, dass die bei der spanenden Bearbeitung anfallenden Späne, die Fördervorrichtung und insbesondere den vorgesehenen Ansaugbereich verschmutzen und dadurch gegebenenfalls die Funktionsfähigkeit der Fördervorrichtung und des Ansaugbereichs beeinträchtigen. Außerdem kann bei ausreichend starkem Ansaugen des Werkstücks an die Transporteinrichtung, und somit ausreichendem Kraftschluss zwischen Transporteinrichtung und Werkstück, auf eine zusätzliche Vorschubeinrichtung, welche eine Vorschubkraft auf das Werkstück während der spanenden Bearbeitung ausübt, verzichtet werden. D.h., die notwendige Vorschubkraft für die spanende Bearbeitung kann von der Fördervorrichtung zur Verfügung gestellt werden, wodurch der Aufbau der Vorrichtung zum spanenden Bearbeiten von Werkstücken gemäß der vorliegenden Erfindung vereinfacht werden kann.

Das Werkzeug zur spanenden Bearbeitung weist eine Bearbeitungsrichtung auf, die parallel zu der Förderrichtung ist. Bei den spanend zu bearbeitenden Werkstücken handelt es sich bevorzugt um plattenförmige Werkstücke, insbesondere um Rohplatten, die zumindest teilweise aus Holz, Holzwerkstoffen, Kunststoff, Aluminium oder einer Kombination hiervon bestehen.

Werden wie bevorzugt vorgeschlagen die Absaugeinrichtung und der Ansaugbereich anhand einer gemeinsamen Unterdruckvorrichtung mit Unterdruck versorgt, kann der Aufwand hinsichtlich der des Vorsehens von Strömungskanälen reduziert werden. Ferner wird lediglich eine Unterdruckvorrichtung benötigt, was den Aufwand und somit die Kosten für die Herstellung der Vorrichtung sowie die Betriebskosten reduziert.

Insbesondere kann gemäß einer bevorzugten Ausführungsform auf eine separate, in der Vorrichtung zum spanenden Bearbeiten vorgesehene Unterdruckvorrichtung bzw. Vakuumpumpe für die Bereitstellung des benötigten Unterdrucks, verzichtet werden, und stattdessen eine zentrale Absauganlage für Späne (in vielen Holzbearbeitungsbetrieben vorgesehen) genutzt werden. Was ebenfalls die Herstellungskosten sowie die Betriebskosten der Vorrichtung zur spanenden Bearbeitung senkt. Des Weiteren kann durch die Verwendung einer externen, bevorzugt zentralen Absauganlage auf die Integration eines Staubfilters bzw. Sammelbehälters für Späne verzichtet werden. Dadurch können mögliche Störungen einer in die Vorrichtung integrierten Unterdruckvorrichtung aufgrund von Verschmutzung ausgeschlossen werden. Sollte dies bauseitig nicht möglich sein bzw. nicht gegeben sein, besteht auch die Möglichkeit die Unterdruckeinrichtung in die Vorrichtung zum spanenden Bearbeiten zu integrieren, dies kann insbesondere von Vorteil sein, falls die Vorrichtung nicht ortsfest aufgestellt ist.

Gemäß einer Ausführungsform weist die Absaugeinrichtung eine Absaugkammer auf, welche das Werkzeug der Bearbeitungsvorrichtung teilweise umschließt und unterhalb der Förderstrecke angeordnet ist, wodurch die Späne von der Förderstrecke aus gesehen nach unten abgesaugt werden. Hierbei reicht die Absaugkammer bevorzugt bis annähernd an eine Förderebene, welche durch die Transporteinrichtung ausgebildet wird und sich parallel zu der Transporteinrichtung erstreckt. Hierdurch kann die bei konventionellen Trennbearbeitungsvorrichtungen vorgesehene Absaughaube, die gewöhnlich oberhalb der Bearbeitungsvorrichtung vorgesehen ist, entfallen, was die Zugänglichkeit der Bearbeitungsvorrichtung und der Förderstrecke verbessert. Ferner kann dadurch der Aufwand für die notwendige Verschlauchung/Verrohrung bzw. des Vorsehens von Strömungskanälen weiter reduziert werden, da die Luftströmungsleitelemente für die Absaugeinrichtung sowie den Absaugbereich unterhalb der Förderstrecke gemeinsam vorgesehen werden können. Des Weiteren kann hierdurch die Absaugleistung der Absaugeinrichtung verbessert werden, und insbesondere die Absaugung auf den Bereich bzw. die Bereiche konzentriert werden, an welchem bzw. an welchen die Späne hauptsächlich anfallen, nämlich in der näheren Umgebung des Werkzeugs.

Gemäß einer Weiterbildung der vorliegenden Erfindung weist die Fördervorrichtung mindestens zwei zueinander parallel verlaufende Transporteinrichtungen auf, welche jeweils anhand einer Antriebsrolle und einer Umlenkrolle aufgenommen sind, und durch wenigstens einen Motor angetrieben werden. Ferner wird das Werkzeug zwischen den zumindest zwei Transporteinrichtungen vorgesehen, insbesondere mittig von den mindestens zwei Transporteinrichtungen vorgesehen. Anhand der mindestens zwei Transporteinrichtungen und der mittigen Anordnung des Werkzeugs kann sichergestellt werden, dass das Werkstück sich während der spanenden Bearbeitung nicht verdreht, da auf beiden Seiten des Werkzeugs Vorschubkräfte (F_{VL}, F_{VR}), die durch den Kraftschluss zwischen Transporteinrichtung und Werkstück entstehen, wirken, und die beiden Vorschubkräfte (F_{VL}, F_{VR}) weitgehend gleich groß sind.

Ferner kann der Ansaugbereich zwischen den mindestens zwei Transporteinrichtung der Fördervorrichtung und dem Werkzeug angeordnet sein und eine Vielzahl von Ansauglöchern aufweisen, anhand welcher das Ansaugen der Werkstücke erfolgt. Bevorzugt wird der Ansaugbereich in der Nähe des Werkstücks vorgesehen, wodurch ein maximaler Anpressdruck des Werkstücks an die Transporteinrichtung in der Nähe des Werkstücks realisiert werden kann, womit während der spanenden Bearbeitung ein maximaler Kraftschluss zwischen dem zu bearbeitenden Werkstück und der bzw. den Transporteinrichtung(en) vorliegt, wodurch eine ausreichende Vorschubkraft für die spanende Bearbeitung gewährleistet werden kann. Des Weiteren kann dadurch eine ausreichende Positionsgenauigkeit des Werkstücks für die spanende Bearbeitung sichergestellt werden. Hierzu kann die Anzahl der Ansauglöcher (Dichte der vorgesehenen Ansauglöcher) variiert werden, insbesondere in der Nähe des Werkzeugs erhöht und in Randbereichen reduziert werden.

Aufgrund der nahen Anordnung des Ansaugbereichs an die Bearbeitungsstelle ist die Belastung bzw. die Verschmutzung des Ansaugbereichs mit Späne und Staub äußerst hoch, weshalb das erfindungsgemäße gemeinsame Vorsehen der Absaugeinrichtung und des Ansaugbereichs, insbesondere die gemeinsame Versorgung der Absaugeinrichtung und des Ansaugbereichs mit Unterdruck, besonders voreilhaft ist.

Gemäß einer Ausführungsform sind die Absaugeinrichtung und der Ansaugbereich strömungsmäßig parallel zueinander, insbesondere über einen gemeinsamen Absauganschluss, mit der Unterdruckvorrichtung verbunden, wobei der Ansaugbereich bevorzugt in einen Einlauf-Ansaugbereich und einen Auslauf-Ansaugbereich aufgeteilt ist. Mit dieser Ausführungsform ist es möglich, die Saugleistung der Absaugeinrichtung und des Ansaugbereichs bzw. der Ansaugbereiche unabhängig voneinander einzustellen. Damit ist es möglich, die Vorrichtung zum spanenden Bearbeiten an produktspezifische Faktoren wie Gewicht, Oberflächenbeschaffenheit und Spanentwicklung, anzupassen.

Ferner kann die Fördervorrichtung mindestens vier parallel verlaufende Transporteinrichtungen aufweisen, wodurch der Kraftschluss zwischen Werkstück und den Transporteinrichtungen weiter erhöht werden kann. Durch den dadurch realisierten größeren Abstand zwischen Werkzeug und Transporteinrichtungen, insbesondere dem größeren Abstand zwischen Werkzeug und den jeweiligen äußeren Transporteinrichtungen, kann der Hebel zwischen resultierender Vorschubkraft und Schnittkraft des Werkzeugs vergrößert werden, was zu einem stabileren Bearbeitungsvorgang und einem stabileren Transport des Werkstücks, insbesondere während der spanenden Bearbeitung, führt. Ferner kann dadurch der geradförmige Weitertransport des spanend bearbeiteten Werkstücks sichergestellt werden.

Gemäß einer Weiterbildung umfasst die Vorrichtung zum spanenden Bearbeiten ferner eine Niederhaltevorrichtung mit mehreren in Förderrichtung hintereinander angeordneten Rollen, Riemen, Schienen und dergleichen zum Niederhalten bzw. zusätzlichen Andrücken der Werkstücke an die Transporteinrichtung(en). Auf diese Weise können die Werkstücke falls notwendig zusätzlich zu dem durch das Ansaugen erzielten Anpressdruck auf die Transporteinrichtung(en) gedrückt werden, wodurch ein ausreichender Kraftschluss zwischen Transporteinrichtung(en) und Werkstück sichergestellt werden kann, dies kann insbesondere notwendig werden, falls die Schnittkraft während der spanenden Bearbeitung äußerst hoch ist, wie zum Beispiel bei dickeren Werkstücken oder härteren Materialien wie z.B. Aluminium.

Ferner kann die Transporteinrichtung(en) als Kette bzw. Zahnriemen, insbesondere einem Zahnriemen der im Bereich der Kontaktfläche mit den Werkstücken aus Naturkautschuk, Silikonkautschuk oder einem entsprechenden Material mit hohem Reibwert besteht, ausgebildet sein. Dadurch ist es möglich, die Reibung zwischen Werkstück und Transporteinrichtung(en) zu erhöhen, wodurch der notwendige Kraftschluss zwischen Werkstück und Transporteinrichtung(en) eher erreicht werden kann. Folglich kann gegebenenfalls die notwendige Saugleistung des Ansaugbereichs bzw. der Ansaugbereiche reduziert werden, wodurch Energie eingespart werden kann.

Bevorzugt kann die Bearbeitungsvorrichtung als eine Schneidevorrichtung mit einem Sägeblatt ausgebildet sein. Auf diese Weise ist es möglich, die bei dem Sägevorgang entstehenden Späne durch die Absaugeinrichtung abzusaugen und gegebenenfalls einer zentralen Absauganlage zuzuführen. Ferner kann gleichzeitig durch den Ansaugbereich bzw. die Ansaugbereiche das zu schneidende Werkstück ausreichend an die Transporteinrichtung(en) angedrückt werden, so dass lediglich aufgrund der Transportbewegung durch die Fördervorrichtung eine ausreichende Vorschubkraft für den Sägevorgang vorliegt. In diesem Fall kann zusätzlich in Kombination mit den zumindest vier Transporteinrichtungen und der mittigen Anordnung des Werkzeugs sichergestellt werden, dass die durch den Schneidevorgang entstehenden zwei Werkstückhälften sauber, also ohne sich zu verdrehen, abtransportiert werden.

Gemäß einer Ausführungsform umfasst die Vorrichtung zum spanenden Bearbeiten von plattenförmigen Werkstücken ferner ein Grundgestell zur Aufnahme der Fördervorrichtung, der Bearbeitungsvorrichtung, der Absaugeinrichtung und des Ansaugbereichs bzw. der Ansaugbereiche, welches unterhalb der Fördervorrichtung in Form eines Kastengehäuses ausgebildet ist, welches eine Einlaufschottwand, eine Auslaufschottwand und eine hintere Schottwand aufweist. Hierbei dienen die Schottwände zur definierten Ausbildung von Saugkammern. Genauer gesagt, bildet die Einlaufschottwand zusammen mit einem Abdeckblech der Absaugkammer und Außenwänden des Kastengehäuses eine Einlauf-Saugkammer, die unter dem Einlauf-Ansaugbereich angeordnet ist. Die Auslaufschottwand bildet ferner zusammen mit dem Abdeckblech der Absaugkammer, der hinteren Schottwand und den Außenwänden des Kastengehäuses eine Auslauf-Saugkammer, welche unterhalb des Auslauf-Ansaugbereichs angeordnet ist. Des Weiteren ist die Absaugkammer bevorzugt nach unten, in das Kastengehäuse hinein, offen ausgebildet, wodurch drei miteinander offen kommunizierende Saugkammern ausgebildet sind, welche bevorzugt anhand des gemeinsamen Absauganschlusses, der z.B. an einer Außenwand des Kastengehäuses vorgesehen ist, mit der Unterdruckvorrichtung parallel zueinander verbunden sind.

Hierdurch kann auf einfache Weise, ohne großen Verschlauchungs- bzw. Verrohrungsaufwand eine Fluidverbindung zwischen Ansaugbereich bzw. Ansaugbereichen, Absaugvorrichtung (Absaugkammer) und Unterdruckvorrichtung hergestellt werden. Hierbei kann insbesondere anhand der Gestaltung der Schottwände Einfluss auf das Strömungsverhalten der Saugluft genommen werden, wodurch die Saugleistung (Absaugleistung bzw. Ansaugleistung) in den drei Saugkammern variiert bzw. eingestellt werden kann.

Ferner kann der Absauganschluss kreisförmig ausgebildet sein, wobei der Absauganschluss bevorzugt einen Durchmesser von 200 mm aufweist. Hierbei kann der Absauganschluss insbesondere im unteren Bereich einer Außenwand des Kastengehäuses vorgesehen werden, wodurch die einzelnen Saugkammern gleichmäßig (ohne Turbulenzen) mit Saugluft (Unterdruck) versorgt werden können. Auf diese Weise ist es ferner möglich, eine Ansammlung von Spänen in dem Kastengehäuse größtenteils zu vermeiden.

Gemäß einer Weiterbildung ist es ferner möglich, die Einlaufschottwand und die Auslaufschottwand so in dem Kastengehäuse aufzunehmen, dass sie jeweils um eine Achse derart schwenkbar sind, dass die Ausrichtung der beiden Schottwände zueinander variierbar ist, wodurch das Ansaugluftverhältnis zwischen den drei Saugkammern variiert werden kann. Hierdurch ist es anhand einer einfachen konstruktiven Lösung möglich, das Ansaugluftverhältnis und die damit verbundene Saugleistung der drei Saugkammern zu variieren, wodurch eine Anpassung an produktspezifische Faktoren wie Gewicht, Oberflächenbeschaffenheit und Spanentwicklung ermöglicht ist.

Ferner können der Ansaugbereich bzw. die Ansaugbereiche durch Abdeckbleche des Kastengehäuses ausgebildet sein, welche die Vielzahl von Ansauglöchern aufweisen. Auf diese Weise ist es möglich, den Ansaugbereich bzw. die Ansaugbereiche auf einfache Art auszubilden. Des Weiteren ist es dadurch auf einfache Weise möglich, die Ansaugcharakteristik (Ansaugleistung und Verteilung bzw. Anzahl der Ansauglöcher) zu verändern, es ist lediglich notwendig die Abdeckbleche auszutauschen. Ebenfalls ist dadurch eine einfache und schnelle Wartung der Vorrichtung möglich.

Gemäß einer Weiterbildung ist der Ansaugbereich bzw. sind die Ansaugbereiche bevorzugt als abgeschlossener Saugkasten bzw. abgeschlossene Saugkästen, die insbesondere als Saugrohr(e) ausgebildet sind, realisiert. Auf diese Weise ist es möglich, den oder die Ansaugbereiche als abgeschlossene Einheit(en) auszubilden, die einfach ausgetauscht werden kann/können. Dies bietet insbesondere hinsichtlich der Luftdichtheit den Vorteil, dass das Kastengehäuse selbst nicht luftdicht oder annähernd luftdicht ausgebildet werden muss, sondern es ausreichend ist, wenn der Saugkasten oder die Saugkästen sowie die Absaugkammer, welche innerhalb des Kastengehäuses angeordnet ist, ausreichend luftdicht ausgebildet sind. Hierdurch können auf einfache Weise unerwünschte Geräusche, die aufgrund von Luft, die durch Löcher und/oder Spalte in dem Kastengehäuse strömt, erzeugt werden, vermieden werden.

Ferner betrifft die Erfindung ein Verfahren, welches bevorzugt einen der zuvor genannten Aspekte einsetzen kann.

### Kurze Beschreibung der Zeichnungen

- Fig. 1: zeigt im Schnitt eine Vorderansicht einer Ausführungsform der Vorrichtung zum spanenden Bearbeiten von Werkstücken gemäß der vorliegenden Erfindung,
- Fig. 2: zeigt eine Draufsicht einer Ausführungsform der Vorrichtung zum spanenden Bearbeiten von Werkstücken gemäß der vorliegenden Erfindung mit zwei Transporteinrichtungen, wobei die zwei Ansaugbereiche anhand von Abdeckblechen ausgebildet sind,
- Fig. 3: zeigt eine Draufsicht einer Ausführungsform der Vorrichtung zum spanenden Bearbeiten von Werkstücken gemäß der vorliegenden Erfindung mit vier Transporteinrichtungen, wobei die Ansaugbereiche anhand von Abdeckblechen ausgebildet sind,
- Fig. 4: zeigt eine Draufsicht einer Ausführungsform der Vorrichtung zum spanenden Bearbeiten von Werkstücken gemäß der vorliegenden Erfindung mit vier Transporteinrichtungen, wobei die Ansaugbereiche anhand von abgeschlossenen Saugkästen ausgebildet sind, und
- Fig. 5: zeigt eine Draufsicht einer Ausführungsform der Vorrichtung zum spanenden Bearbeiten von Werkstücken gemäß der vorliegenden Erfindung mit zwei Transporteinrichtungen, wobei ein zu bearbeitendes Werkstück dargestellt ist.

Detaillierte Beschreibung bevorzugter Ausführungsformen

Nachfolgend werden unter Bezugnahme auf die beigefügten Figuren bevorzugte Ausführungsformen der vorliegenden Erfindung beschrieben. Weitere in diesem Zusammenhang genannte Varianten und Modifikationen einzelner Merkmale können jeweils miteinander kombiniert werden, um neue Ausführungsformen auszubilden.

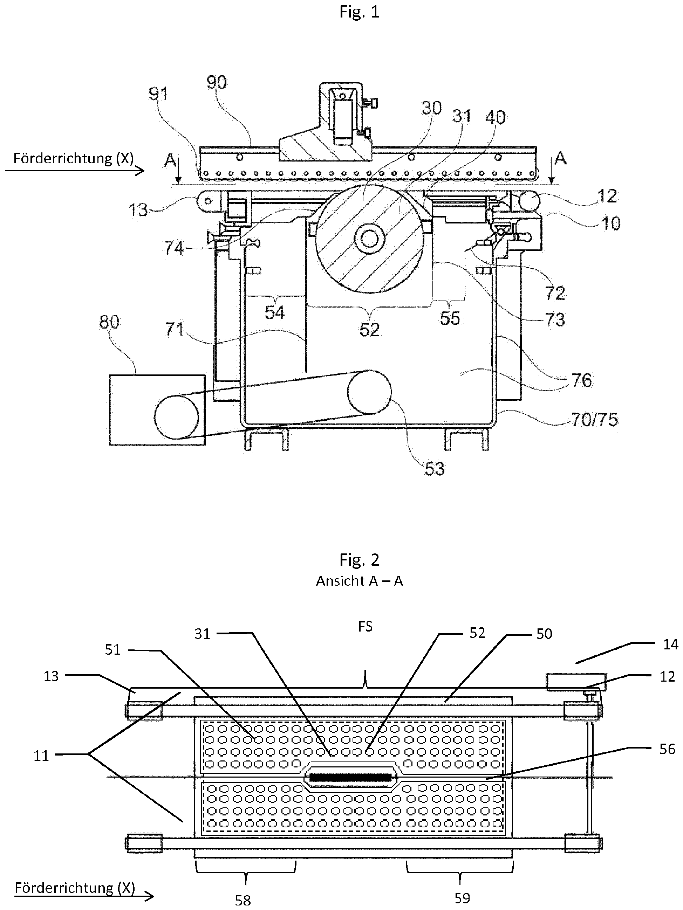

Fig. 1 zeigt eine Vorderansicht einer Vorrichtung zum spanenden Bearbeiten von plattenförmigen Werkstücken W gemäß einer bevorzugten Ausführungsform der vorliegenden Erfindung im Schnitt. Innerhalb der dargestellten Vorrichtung können die plattenförmigen Werkstücke W anhand einer Fördervorrichtung 10 in einer horizontalen Richtung gefördert werden, so dass die Werkstücke W an einer Bearbeitungsvorrichtung 30 vorbei geführt werden (in Fig. 1 bspw. von links nach rechts). Die Bearbeitungsvorrichtung 30 ist hierbei insbesondere im Bereich einer Förderstrecke FS der Fördervorrichtung 10 angeordnet und führt mit einem Werkzeug 31 eine spanende Bearbeitung an den vorbeigeführten Werkstücken W aus. Ferner weist die Vorrichtung wie in der Fig. 1 dargestellt eine Absaugeinrichtung 40 auf, mit welcher die während der spanenden Bearbeitung der Werkstücke W durch die Bearbeitungsvorrichtung 30 anfallenden Spänen abgesaugt und abgeführt werden. Die Vorrichtung weist ferner wie in Fig. 1 illustriert eine Unterdruckvorrichtung 80 auf, welche dazu dient, die Absaugeinrichtung 40 und den Ansaugbereich 50 (siehe Figuren 2-5) mit ausreichend Unterdruck zu versorgen.

Hierbei kann die Unterdruckvorrichtung 80 unter anderem extern ausgebildet sein, also separat von der Vorrichtung zum spanenden Bearbeiten, oder mit in der Vorrichtung integriert sein. Die externe Variante bietet sich insbesondere an, wenn am Aufstellungsplatz der Vorrichtung, zum Beispiel in einer Fertigungshalle eines Holzverarbeitungsbetriebs, eine zentrale Absauganlage installiert ist. In diesem Fall kann eine spezielle Wartung der Vorrichtung, d.h. das Warten und Säubern von Staubfiltern, das Entleeren von Sammelbehältern für die Späne, usw. entfallen.

In Fig. 1 ist jedoch zur Vereinfachung der Darstellung beispielhaft die Variante gezeigt, in welcher die Unterdruckvorrichtung in der Vorrichtung integriert bzw. in der näheren Umgebung der Vorrichtung als separate aber zu der Vorrichtung gehörende Unterdruckvorrichtung ausgebildet ist. Dies bietet insbesondere einen Vorteil, wenn die Vorrichtung zum spanenden Bearbeiten selbst nicht ortsfest installiert ist, sondern eine mobile Einrichtung ist. Damit entfällt das Anschließen bzw. Trennen von der zentralen Absauganlage. Die Unterdruckvorrichtung wird bevorzugt in Form einer Vakuumpumpe realisiert.

Die Absaugeinrichtung 40 weist ferner eine Absaugkammer 52 auf, welche wie in Fig. 2 dargestellt, das Werkzeug 31 teilweise umschließt und unterhalb der Förderstrecke FS angeordnet ist. Die Absaugkammer 52 ist nach oben hin offen und steht auf der Unterseite der Förderstrecke FS mit der Unterdruckvorrichtung in Fluidverbindung, womit eine Sogwirkung auf die bei der spanenden Bearbeitung anfallenden Späne ausgeführt werden kann, und damit diese von der Förderstrecke aus gesehen nach unten abgesaugt werden können und einem Sammelbehälter oder dergleichen zugeführt werden können.

Die Vorrichtung weist ferner in der in Fig. 2 dargestellten Ausführungsform zwei Transporteinrichtungen 11 auf, welche symmetrisch zu dem Werkzeug 31 und parallel zueinander angeordnet sind. Wie ferner dargestellt, sind diese jeweils anhand von einer Antriebsrolle 12 und einer Umlenkrolle 13 aufgenommen und werden durch einen gemeinsamen Motor 14 angetrieben. Es ist jedoch auch denkbar, diese mit separaten Antrieben zu versehen. Des Weiteren wird der Ansaugbereich 50 bevorzugt um das Werkzeug 31 herum gebildet, um die Ansaugleistung und damit die Ansaugkraft mit welcher das Werkstück W auf die Transporteinrichtungen 11 angedrückt wird, während der spanenden Bearbeitung des Werkstücks W zu maximieren.

Wie ebenfalls der Fig. 2 entnommen werden kann, wird der Ansaugbereich 50 bevorzugt zwischen den beiden Transporteinrichtungen 11 und dem Werkzeug 31 angeordnet und weist eine Vielzahl von Ansauglöchern 56 auf, durch welche der Unterdruck auf das vorbeigeführte Werkstück W wirkt. Hierbei kann der Abstand zwischen den jeweiligen Ansauglöchern 56 über die Längsrichtung des Ansaugbereichs 50, welche parallel zu der Förderrichtung X (in Fig. 2 von links nach rechts) der Fördervorrichtung 10 ist, variiert werden. So wird bevorzugt in der Nähe des Werkzeugs 31 der Abstand zwischen den Ansauglöchern 56 reduziert (die Dichte der Ansauglöcher erhöht), und in dem Einlaufbereich 58 und dem Auslaufbereich 59 der Fördervorrichtung 10 der Abstand in Richtung vom Werkzeug 31 weg vergrößert (nicht dargestellt).

Wie der Fig. 1 ebenfalls entnommen werden kann, sind die Absaugeinrichtung 40 und der Ansaugbereich 50 strömungsmäßig parallel zueinander angeordnet, d.h. der Unterdruck von der Unterdruckvorrichtung 80 wird parallel zu der Absaugeinrichtung 40 und dem Ansaugbereich 50 geführt bzw. geleitet. Hierzu können beide über einen gemeinsamen Anschlussabschnitt 53 mit der Unterdruckvorrichtung 80 verbunden sein.

Wie vorher bereits beschrieben, weist die Fördereinrichtung 10 einen Einlaufbereich 58 und einen Auslaufbereich 59 auf. Entsprechend den beiden Bereichen kann auch der Ansaugbereich in einen Einlauf-Ansaugbereich und einen Auslauf-Ansaugbereich aufgeteilt werden.

In der in Fig. 1 dargestellten Ausführungsform weist die Vorrichtung ferner eine Niederhaltevorrichtung 90 auf, mit welcher falls notwendig die Werkstücke W niedergehalten und damit gegebenenfalls zusätzlich auf die Transporteinrichtungen 11 angedrückt werden können. Falls die zusätzliche Andruckkraft nur während der spanenden Bearbeitung der Werkstücke W benötigt wird, kann es ausreichend sein, die Niederhaltevorrichtung 90 lediglich in dem Bereich der Fördervorrichtung 10 oberhalb dieser anzubringen, in welchem die spanende Bearbeitung erfolgt.

Die Niederhaltevorrichtung 90 kann insbesondere wie dargestellt in Form einer kopfüber montierten Rollenbahn realisiert werden, deren Abstand zu der Fördervorrichtung 10 und damit zu den transportierten Werkstücken 10 einstellbar ist. Anstatt der dargestellten, in Förderrichtung X hintereinander angeordneten Rollen 91 können auch Riemen, Schienen oder dergleichen vorzusehen.

Die Transporteinrichtungen 11 können als Kette bzw. Riemen, bevorzugt Zahnriemen ausgebildet sein, was jedoch in den

Figuren nicht im Detail dargestellt ist. Falls als Transporteinrichtungen 11 ein Zahnriemen verwendet wird, sollte dieser insbesondere im Bereich der Kontaktfläche mit den Werkstücken W einen hohen Reibwert aufweisen. Daher ist es vorteilhaft, wenn der Zahnriemen im Bereich der Kontaktfläche aus Naturkautschuk, Silikonkautschuk oder einem entsprechenden Material mit hohem Reibwert gefertigt ist.

Wie der Fig. 1 ebenfalls entnommen werden kann, ist bei der dargestellten Ausführungsform die Bearbeitungsvorrichtung 30 in Form einer Schneidvorrichtung 30 ausgebildet, welche ein Sägeblatt 31 aufweist. Das Sägeblatt 31 ist hierbei stehend (vertikal) montiert und rotiert um eine Drehachse, die senkrecht zur Förderrichtung X und parallel zu einer durch die Fördervorrichtung 10 (bzw. die Transporteinrichtungen 11) aufgespannten Förderebene ist. Ferner steht das Sägeblatt 31 etwas über die Transporteinrichtungen 11 nach oben vor, um zu gewährleisten, dass die Werkstücke W auch trennbearbeitet werden können. Durch die geschilderte Anordnung ist die Bearbeitungsrichtung, d.h. die Schneidrichtung des Sägeblatts 31 parallel zur Förderrichtung X der Fördervorrichtung 10 ausgebildet.

Nachfolgend wird das in Fig. 1 dargestellte beispielhafte Grundgestell 70 der Vorrichtung zum spanenden Bearbeiten näher beschrieben. Das Grundgestell 70 dient zur Aufnahme der Fördervorrichtung 10, der Bearbeitungsvorrichtung 30, der Absaugeinrichtung 40 und des Ansaugbereichs bzw. der Ansaugbereiche 50. Bevorzugt ist das Grundgestell 70 unterhalb der Fördervorrichtung 10 in Form eines Kastengehäuses 75 ausgebildet. Wie Fig. 1 zu entnehmen, weist das Kastengehäuse 75 drei Schottwände auf.

Unterhalb des Einlaufbereichs 58 ist ein Einlaufschottwand 71 angeordnet, die zusammen mit einem Abdeckblech 74 der Absaugkammer 52 und Außenwänden 76 des Kastengehäuses 75 eine Einlauf-Saugkammer 54 bildet. Des Weiteren ist unterhalb des Auslaufbereichs 59 eine Auslaufschottwand 73 in der Nähe des Werkzeugs 31 und der Absaugkammer 52 angeordnet. Eine hintere Schottwand 72 ist am anderen Ende des Auslaufbereichs 59, d.h. am vom Werkzeug 31 entfernten Ende des Auslaufbereichs 59, angeordnet. Die Auslaufschottwand 73 und die hintere Schottwand 72 bilden zusammen mit den Außenwänden 76 des Kastengehäuses 75 und dem Abdeckblech 74 der Absaugkammer 52 eine Auslauf-Saugkammer 55. Wie in der Fig. 1 dargestellt, sind die drei Schottwände parallel zueinander und senkrecht zur Förderrichtung X angeordnet. Ferner sind die Absaugkammer 52, die Einlauf-Saugkammer 54 und die Auslauf-Saugkammer 55 nach unten offen ausgebildet, wodurch drei miteinander offen kommunizierende Saugkammern 52, 54, 55 ausgebildet sind. Wie ebenfalls gezeigt, sind die drei Saugkammern 52, 54, 55 mittels eines gemeinsamen Anschlussabschnitt 53, der an einer Außenwand 76 des Kastengehäuses 75 vorgesehen ist, mit der Unterdruckvorrichtung 80 verbunden.

Falls die Unterdruckvorrichtung 80 direkt in das Kastengehäuse 75 integriert werden soll, ist eine ähnliche Ausbildung denkbar. In diesem Fall kann die Unterdruckvorrichtung 80 in einer vierten Kammer untergebracht werden, welche senkrecht zu den drei Saugkammern angeordnet ist, und über einen mittigen Durchlass mit den drei Saugkammern kommunizieren kann.

In beiden Fällen ist es vorteilhaft, wenn der Anschlussabschnitt 53 oder der Durchlass im unteren Bereich des Kastengehäuses 75, vorgesehen ist, wie z.B. in einer Außenwand 76 des Kastengehäuses 75. Bevorzugt wird der Anschlussabschnitt 53 mittig in einer zur Förderrichtung X parallelen Außenwand 76 des Kastengehäuses 75 vorgesehen.

Wie in der in Fig. 2 dargestellten Draufsicht der Vorrichtung zum spanenden Bearbeitung von Werkstücken gemäß einer Ausführungsform gezeigt, ist der Ansaugbereich 50 bzw. sind die Ansaugbereiche 58 / 59 durch Abdeckbleche 51 des Kastengehäuses 75 ausgebildet, welche die Vielzahl von Ansauglöchern 56 aufweisen. In der dargestellten Ausführungsform sind zwei symmetrische Abdeckbleche 51 vorgesehen, die jeweils den kompletten Ansaugbereich 50 rechts bzw. links vom Werkzeug abdecken.

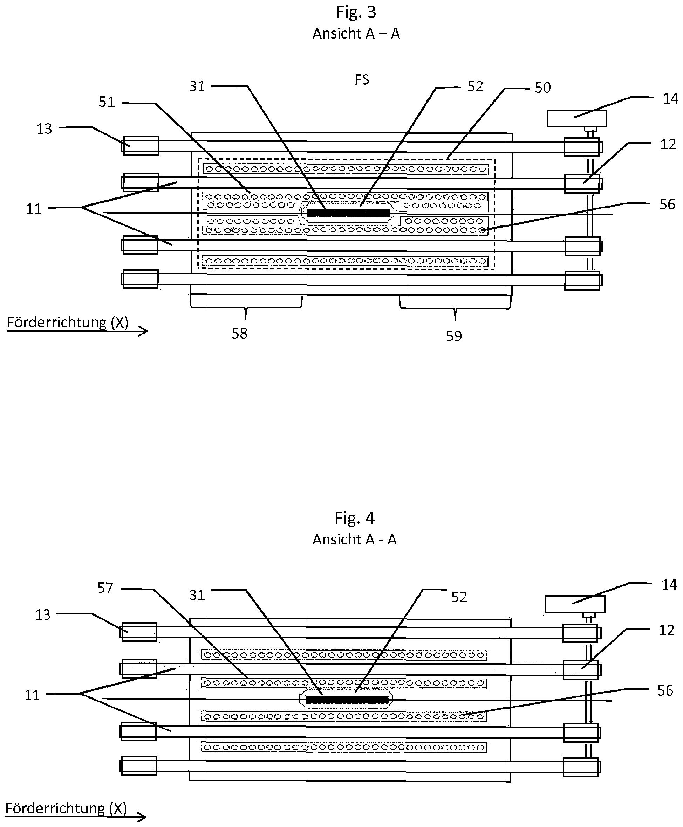

In Fig. 3 ist eine andere Ausführungsform dargestellt, in welcher die Fördervorrichtung 10 vier Transporteinrichtungen 11 aufweist, welche parallel zueinander und symmetrisch zum Werkzeug 31 angeordnet sind. Entsprechend den vier Transporteinrichtungen 11 ist der Ansaugbereich 50 anhand von vier Abdeckblechen 51 ausgebildet, von denen zwei Abdeckbleche 51 zwischen dem Werkzeug 31 und den inneren Transporteinrichtungen 11 angeordnet sind, und die weiteren zwei Abdeckbleche 51 zwischen den inneren und den äußeren Transporteinrichtungen 11 angeordnet sind. Anhand dieser Anordnung der Abdeckbleche 51 kann der Abdeckbereich 51 maximiert werden, wodurch die spanend bearbeiteten Werkstücke W großflächig angesaugt und somit großflächig an die Transporteinrichtungen 11 angedrückt werden.

In der in Fig. 4 dargestellten Ausführungsform ist die Fördervorrichtung 10 ebenfalls anhand von vier Transporteinrichtungen 11 ausgebildet, welche parallel zueinander und symmetrisch zum Werkzeug 31 angeordnet sind. Im Gegensatz zur in Fig. 3 dargestellter Ausführungsform ist jedoch der Ansaugbereich 50 nicht anhand von vier Abdeckblechen 51 ausgebildet, sondern wird durch vier in sich abgeschlossene Saugkästen 57 ausgebildet, welche bevorzugt in Form von Saugrohren mit Rechteckquerschnitt kostengünstig ausgebildet werden. Wie bei der Ausbildung mit Abdeckblechen 51, weisen die Saugkästen 57 die Vielzahl von Ansauglöchern 56 auf. Die Realisierung des Ansaugbereichs 50 anhand von Saugkästen 57 bringt den Vorteil mit sich, dass die Saugkästen 57 selbst, bis auf die Ansauglöcher 56 und den Anschluss für die Unterdruckvorrichtung 80 luftdicht ausgebildet sind. Was eine aufwendige, annähernd luftdichte Abdichtung des Kastengehäuses 75 obsolet macht.

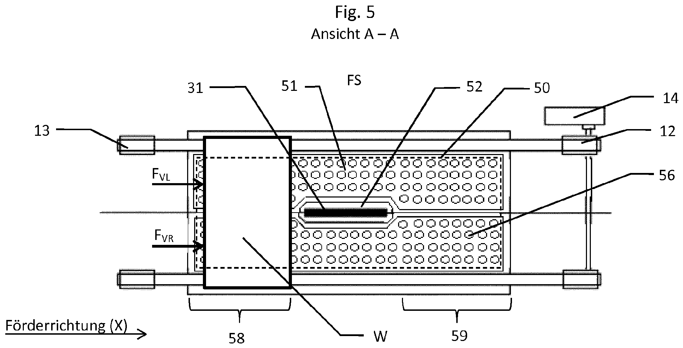

Fig. 5 dient zur Verdeutlichung der oben bereits geschilderten Vorschubkräfte (F_{VL}, F_{VR}) die auf das Werkstück W aufgrund des erzielten Kraftschlusses zwischen den Transporteinrichtungen und dem Werkstück wirken. In der Fig. 5 ist ein Werkstück W dargestellt, welches sich im Einlaufbereich 58 befindet, d.h. sich kurz vor der spanenden Bearbeitung befindet. Wie der Fig. 5 entnommen werden kann, deckt das plattenförmige Werkstück W großflächig die Ansaugbohrungen 56 des Einlauf-Ansaugbereichs ab, wodurch der Unterdruck auf das Werkstück W wirken kann und somit dieses an die Transporteinrichtungen 11 zusätzlich zu der eigenen Gewichtskragt angedrückt wird. Durch das Ansaugen bzw. Andrücken des Werkstücks an die Transporteinrichtungen 11 kann ein Kraftschluss erzeugt werden, wodurch im Zusammenspiel mit der Transportgeschwindigkeit der Transporteinrichtungen 11 eine bzw. mehrere Vorschubkräfte (F_{Vn}, F_{Vn}), in der dargestellten Ausführungsform zwei Vorschubkräfte (F_{VL}, F_{VR}), auf das Werkstück wirken, welche bei der spanenden Bearbeitung als Vorschubkraft ausgenutzt werden können.

Zusammenfassend wird somit mit der erfindungsgemäßen Vorrichtung zum spanenden Bearbeiten von Werkstücken W und deren Weiterbildungen eine kostengünstige Vorrichtung geschaffen, mit welcher bevorzugt plattenförmige Werkstücke W unter Ausnutzung eines in die Vorrichtung integrierten Ansaugbereichs 50 an die Transporteinrichtung 11 bzw. Transporteinrichtungen 11 einer in der Vorrichtung umfassten Fördervorrichtung 10 durch Ansaugen der Werkstücke W angedrückt werden, wodurch es ermöglicht wird, während der spanenden Bearbeitung die Werkstücke W sicher und positionsgenau mit der Fördervorrichtung 10 zu transportieren.

Als Ergebnis kann auf eine aufwändige Halte- und Vorschubvorrichtung zum Positionieren und Halten der Werkstücke W während der spanenden Bearbeitung, insbesondere zum Bereitstellen des notwendigen Vorschubs (Vorschubkraft) für die spanende Bearbeitung, verzichtet werden. Was die Ausbildung der erfindungsgemäßen Vorrichtung stark vereinfacht. Zusätzlich kann durch die Nutzung einer gemeinsamen Unterdruckvorrichtung 80 für den Ansaugbereich 50 und die Absaugeinrichtung 40, die zum Absaugen von während der spanenden Bearbeitung anfallenden Spänen dient, die Komplexität der Vorrichtung reduziert und durch die Einsparung einer weiteren Unterdruckvorrichtung 80 der Energiebedarf reduziert werden. Des Weiteren kann durch die angebotene Vorrichtung die bekannte Schmutzanfälligkeit konventioneller Fördervorrichtungen mit Ansaugfunktion reduziert werden und durch Entfallen etwaiger Staubfilter bzw. Sammelbehälter für die anfallende Späne, im Falle einer zentralen Absauganlage, der damit verbundene hohe Wartungsaufwand reduziert bzw. vermieden werden.

## Patentansprüche

1. Vorrichtung zum spanenden Bearbeiten von Werkstücken (W), bevorzugt plattenförmigen Werkstücken (W), wobei die Werkstücke (W) insbesondere zumindest teilweise aus Holz, Holzwerkstoffen, Kunststoff, Aluminium, Blech oder einer Kombination hiervon bestehen, aufweisend:
eine Bearbeitungsvorrichtung (30), mit einem Werkzeug (31) zur spanenden Bearbeitung der Werkstücke (W),
eine Absaugeinrichtung (40) zum Absaugen von bei der spanenden Bearbeitung anfallenden Spänen,
einen Ansaugbereich (50) zum Ansaugen der Werkstücke (W) während der spanenden Bearbeitung,
einen Unterdruckschnittstellenbereich, insbesondere einen Anschlussabschnitt (53), für eine Unterdruckvorrichtung (80), welcher Unterdruckschnittstellenbereich mit der Absaugeinrichtung (40) und dem Ansaugbereich (50) in Verbindung steht, um die Absaugeinrichtung (40) und den Ansaugbereich (50) mit Unterdruck zu versorgen, und
eine Fördervorrichtung (10) mit einer Förderstrecke (FS) zum Transportieren der Werkstücke (W) mittels zumindest einer Transporteinrichtung (11) aufweist, wobei die Bearbeitungsvorrichtung (30) im Bereich der Förderstrecke (FS) angeordnet ist und
wobei der Ansaugbereich (50) die Werkstücke (W) in Richtung der zumindest einen Transporteinrichtung (11) ansaugt, **dadurch gekennzeichnet, dass** die Vorrichtung dazu eingerichtet ist, das Werkstück während der spanenden Bearbeitung durch die Fördervorrichtung (10) zu transportieren.

2. Vorrichtung nach Anspruch 1, wobei die Fördervorrichtung (10) mit einer Förderstrecke (FS) zum horizontalen Transportieren der Werkstücke (W) mittels zumindest der Transporteinrichtung (11) vorgesehen ist.

3. Vorrichtung nach Anspruch 1 oder 2, mit der Unterdruckvorrichtung (80), wobei bevorzugt ist, dass die Unterdruckvorrichtung (80) eine externe Absauganlage, insbesondere eine zentrale Absauganlage, oder eine in der Vorrichtung integrierte Unterdruckvorrichtung, insbesondere eine Vakuumpumpe, ist.

4. Vorrichtung nach einem der Ansprüche 2 oder 3, bei der die Absaugeinrichtung (40) eine Absaugkammer (52) aufweist, welche das Werkzeug (31) zumindest teilweise umschließt und unterhalb der Förderstrecke (FS) angeordnet ist, wodurch die anfallende Späne von der Förderstrecke (FS) aus gesehen nach unten abgesaugt werden.

5. Vorrichtung nach einem der Ansprüche 2 bis 4, bei der die Fördervorrichtung (10) mindestens zwei zueinander parallel verlaufende Transporteinrichtungen (11) aufweist, welche jeweils anhand einer Antriebsrolle (12) und einer Umlenkrolle (13) aufgenommen sind, und durch wenigstens einen Motor (14) angetrieben werden, wobei das Werkzeug (31) zwischen den zumindest zwei Transporteinrichtungen (11), bevorzugt mittig, vorgesehen ist, und der Ansaugbereich (50) bevorzugt um das Werkzeug (31) herum gebildet ist.

6. Vorrichtung nach einem der Ansprüche 2 bis 5, bei der der Ansaugbereich (50) eine Vielzahl von Ansauglöchern (56) aufweist und bevorzugt zwischen der mindestens einen Transporteinrichtung (11) und dem Werkzeug (31) angeordnet ist.

7. Vorrichtung nach einem der vorhergehenden Ansprüche, bei der die Absaugeinrichtung (40) und der Ansaugbereich (50) strömungsmäßig parallel zueinander, insbesondere über einen gemeinsamen Unterdruckschnittstellenbereich, insbesondere Anschlussabschnitt (53), mit einer Unterdruckvorrichtung (80) verbunden sind.

8. Vorrichtung nach einem der Ansprüche 2 bis 7, ferner umfassend eine Niederhaltevorrichtung (90) zum Niederhalten und ggf. zusätzlichen Andrücken der Werkstücke (W) an die Transporteinrichtung(en)(11), wobei die Niederhaltevorrichtung (90) insbesondere mehrere in Förderrichtung (X) hintereinander angeordnete Rollen (91) aufweist, oder aus Riemen, Schienen oder dergleichen ausgebildet ist.

9. Vorrichtung nach einem der Ansprüche 2 bis 8, bei der die Transporteinrichtung(en) (11) als Kette bzw. Zahnriemen, insbesondere Zahnriemen der im Bereich der Kontaktfläche mit den Werkstücken (W) aus Naturkautschuk, Silikonkautschuk oder einem entsprechenden Material mit hohem Reibwert bestehet, ausgebildet ist/sind.

10. Vorrichtung nach einem der vorhergehenden Ansprüche, bei der die Bearbeitungsvorrichtung (30) als eine Schneidvorrichtung (30) mit einem Sägeblatt (31) ausgebildet ist.

11. Vorrichtung nach einem der Ansprüche 2 bis 10, ferner umfassend ein Grundgestell (70) zur Aufnahme der Fördervorrichtung (10), der Bearbeitungsvorrichtung (30), der Absaugeinrichtung (40) und des Ansaugbereichs (50) bzw. der Ansaugbereiche (50), das unterhalb der Fördervorrichtung (10) in Form eines Kastengehäuses (75) ausgebildet ist, das eine Einlaufschottwand (71), eine Auslaufschottwand (73) und eine hintere Schottwand (72) aufweist, wobei
die Einlaufschottwand (71) zusammen mit einem Abdeckblech (74) einer/der Absaugkammer (52) und Außenwänden (76) des Kastengehäuses (75) eine Einlauf-Saugkammer (54) bildet,
die Auslaufschottwand (73) zusammen mit dem Abdeckblech (74) der Absaugkammer (52), der hinteren Schottwand (72) und den Außenwänden (76) des Kastengehäuses (75) eine Auslauf-Saugkammer (55) bildet,
die Absaugkammer (52) nach unten, in das Kastengehäuse (75) hinein offen ist, wodurch drei miteinander offen kommunizierende Saugkammern (52, 54, 55) ausgebildet sind, welche anhand des gemeinsamen Unterdruckschnittstellenbereichs, insbesondere Anschlussabschnitt (53), der an einer Außenwand (76) des Kastengehäuses (75) vorgesehen ist, mit Unterdruck versorgt werden können.

12. Vorrichtung nach Anspruch 11, bei der der Unterdruckschnittstellenbereich, insbesondere Anschlussabschnitt (53), kreisförmig ist, und bevorzugt im unteren Bereich einer Außenwand (76) des Kastengehäuses (75) vorgesehen ist.

13. Vorrichtung nach Anspruch 11 oder 12, bei der die Einlaufschottwand (71) und die Auslaufschottwand (73) so in dem Kastengehäuse (75) aufgenommen sind, dass sie jeweils um eine Achse derart schwenkbar sind, dass die Ausrichtung der beiden Schottwände (71, 73) zueinander variierbar ist, wodurch das Ansaugluftverhältnis zwischen den drei Saugkammern (52, 54, 55) variiert werden kann.

14. Vorrichtung nach einem der vorhergehenden Ansprüche, bei der der Ansaugbereich (50) bzw. die Ansaugbereiche (58, 59) durch Abdeckbleche (51) des Kastengehäuses (75) ausgebildet ist/sind, welche die Vielzahl von Ansauglöchern (56) aufweisen und/oder der Ansaugbereich (50) bzw. die Ansaugbereiche (58, 59) als abgeschlossener Saugkasten/Saugkästen (57), insbesondere als Saugrohr/Saugrohre, ausgebildet ist/sind.

15. Verfahren zum spanenden Bearbeiten von Werkstücken (W), bevorzugt plattenförmigen Werkstücken (W), insbesondere Werkstücke (W) die zumindest teilweise aus Holz, Holzwerkstoffen, Kunststoff, Aluminium, Blech, oder einer Kombination hiervon bestehen, aufweisend:
Ansaugen des Werkstücks (W) während einer spanenden Bearbeitung, wobei das Werkstück während der spanenden Bearbeitung transportiert wird,
spanendes Bearbeiten des Werkstücks (W),
Absaugen der bei der spanenden Bearbeitung anfallenden Späne,
wobei ein Absaugen der Späne und ein Ansaugen des Werkstücks (W) durch einen mittels eines gemeinsamen Unterdruckschnittstellenbereichs, insbesondere eines Anschlussabschnitts (53), bereitgestellten Unterdrucks durchgeführt wird.

## Claims

1. Apparatus for machining workpieces (W), preferably panel-formed workpieces (W), wherein the workpieces (W) consist in particular at least partially of wood, wood-based materials, plastic, aluminium, sheet metal or a combination thereof, having:
a processing device (30) with a tool (31) for machining the workpieces (W),
a suction extraction device (40) for sucking out chips produced during the machining,
a suction intake region (50) for sucking in the workpieces (W) during the machining,
a vacuum interface region, in particular a connection section (53), for a vacuum device (80), said vacuum interface region being connected with the suction extraction device (40) and the suction intake region (50) in order to supply the suction extraction device (40) and the suction intake region (50) with vacuum, and a conveyor device (10) with a conveyor section (FS) for transporting the workpieces (W) by means of at least one transport device (11), wherein the processing device (30) is arranged in the region of the conveyor section (FS) and wherein the suction intake region (50) sucks in the workpieces (W) in the direction of the at least one transport device (11), **characterised in that** the apparatus is configured to transport the workpiece through the conveyor device (10) during the machining.

2. Apparatus according to claim 1, wherein the conveyor device (10) is provided with a conveyor section (FS) for the horizontal transportation of the workpieces (W) by means of at least the transport device (11).

3. Apparatus according to claim 1 or 2, with the vacuum device (80), wherein the vacuum device (80) is preferably an external vacuum extraction system, in particular a central vacuum extraction system, or a vacuum device integrated in the apparatus, in particular a vacuum pump.

4. Apparatus according to one of the claims 2 or 3, wherein the suction extraction device (40) has a suction extraction chamber (52) which at least partially surrounds the tool (31) and is arranged below the conveyor section (FS), as a result of which the produced chips are sucked downwards, viewed from the conveyor section (FS).

5. Apparatus according to one of the claims 2 to 4, wherein the conveyor device (10) has at least has two transport devices (11) running parallel to each other, each of which is held by means of a drive roller (12) and a deflection roller (13) and is driven by at least one motor (14), wherein the tool (31) is arranged, preferably centrally, between the at least two transport devices (11), and the suction intake region (50) is preferably formed around the tool (31).

6. Apparatus according to one of the claims 2 to 5, wherein the suction intake region (50) has a plurality of suction holes (56) and is preferably arranged between the at least one transport device (11) and the tool (31).

7. Apparatus according to one of the preceding claims, wherein the suction extraction device (40) and the suction intake region (50) are connected, parallel to each other in terms of flow, with a vacuum device (80), in particular via a common vacuum interface region, in particular a connection section (53).

8. Apparatus according to one of the claims 2 to 7, further comprising a hold-down device (90) for holding down and, optionally, additionally pressing the workpieces (W) onto the transport device(s)(11), wherein the hold-down device (90) has in particular several rollers (91) arranged one after the other in the conveying direction (X), or is formed from belts, rails or the like.

9. Apparatus according to one of the claims 2 to 8, wherein the transport device(s) (11) is/are designed in the form of a chain or toothed belt, in particular a toothed belt which, in the region of the contact surface with the workpieces (W), consists of natural rubber, silicone rubber or a corresponding material with a high coefficient of friction.

10. Apparatus according to one of the preceding claims, wherein the processing device (30) is designed in the form of a cutting device (30) with a saw blade (31).

11. Apparatus according to one of the claims 2 to 10, further comprising a base frame (70), accommodating the conveyor device (10), the processing device (30), the suction extraction device (40) and the suction intake region (50) or the suction intake regions (50), which is formed below the conveyor device (10) in the form of a box frame (75) which has an infeed bulkhead (71), a discharge bulkhead (73) and a rear bulkhead (72), wherein
the infeed bulkhead (71) together with a cover sheet (74) of a/the suction extraction chamber (52) and outer walls (76) of the box frame (75) forms an infeed suction chamber (54),
the discharge bulkhead (73) together with the cover sheet (74) of the suction extraction chamber (52), the rear bulkhead (72) and the outer walls (76) of the box frame (75) forms a discharge suction chamber (55),
the suction extraction chamber (52) is open in a downward direction, into the box frame (75), as a result of which three openly communicating suction chambers (52, 54, 55) are formed which can be supplied with vacuum by means of the common vacuum interface region, in particular the connection section (53), which is provided on an outer wall (76) of the box frame (75).

12. Apparatus according to claim 11, wherein the vacuum interface region, in particular the connection section (53), is circular, and is preferably arranged in the lower region of an outer wall (76) of the box frame (75) .

13. Apparatus according to claim 11 or 12, wherein the infeed bulkhead (71) and the discharge bulkhead (73) are mounted in the box frame (75) in such a way that they can in each case be swivelled around an axis in such a way that the orientation of the two bulkheads (71, 73) relative to one another can be varied, as a result of which the intake air ratio between the three suction chambers (52, 54, 55) can be varied.

14. Apparatus according to one of the preceding claims, wherein the suction intake region (50) or the suction intake regions (58, 59) is/are formed by cover sheets (51) of the box frame (75) which have the plurality of suction holes (56) and/or the suction intake region (50), or the suction intake regions (58, 59) are designed in the form of a closed suction box/suction boxes (57), in particular as a suction pipe/suction pipes.

15. Method for machining workpieces (W), preferably panel-formed workpieces (W), in particular workpieces (W) which consist at least partially of wood, wood-based materials, plastic, aluminium, sheet metal, or a combination thereof, comprising:
sucking in the workpieces (W) during machining, wherein the workpiece is transported during the machining,
machining the workpieces (W),
sucking out the chips produced during the machining,
wherein sucking out the chips and sucking in the workpieces (W) is effected through a vacuum provided by means of a common vacuum interface region, in particular a connection section (53).

## Revendications

1. Dispositif d'usinage par enlèvement de copeaux de pièces (W), de préférence de pièces (W) en forme de plaque, dans lequel les pièces (W) consistent en particulier en au moins partiellement du bois, des matériaux dérivés du bois, de la matière plastique, de l'aluminium, de la tôle ou une combinaison de ceux-ci, présentant :
un dispositif d'usinage (30), avec un outil (31) pour l'usinage par enlèvement de copeaux des pièces (W),
un appareil d'évacuation par aspiration (40) pour l'aspiration de copeaux produits lors de l'usinage par enlèvement de copeaux,
une zone d'aspiration (50) pour l'aspiration des pièces (W) pendant l'usinage par enlèvement de copeaux,
une zone d'interface de dépression, en particulier une section de raccordement (53), pour un dispositif de dépression (80), laquelle zone d'interface de dépression est en liaison avec l'appareil d'évacuation par aspiration (40) et la zone d'aspiration (50) afin d'alimenter en dépression l'appareil d'évacuation par aspiration (40) et la zone d'aspiration (50), et
un dispositif de convoyeur (10) avec un parcours de convoyeur (FS) pour le transport des pièces (W) au moyen d'au moins un appareil de transport (11), dans lequel le dispositif d'usinage (30) est agencé dans la zone du parcours de convoyeur (FS) et dans lequel la zone d'aspiration (50) aspire les pièces (W) en direction d'au moins un appareil de transport (11), **caractérisé en ce que**
le dispositif est conçu afin de transporter la pièce pendant l'usinage par enlèvement de copeaux par le dispositif de convoyeur (10).

2. Dispositif selon la revendication 1, dans lequel le dispositif de convoyeur (10) est prévu avec un parcours de convoyeur (FS) pour le transport horizontal des pièces (W) au moyen d'au moins l'appareil de transport (11).

3. Dispositif selon la revendication 1 ou 2, avec le dispositif de dépression (80), dans lequel il est préféré que le dispositif de dépression (80) soit une installation d'évacuation par aspiration externe, en particulier une installation d'évacuation par aspiration centrale, ou un dispositif de dépression intégré dans le dispositif, en particulier une pompe à vide.

4. Dispositif selon l'une quelconque des revendications 2 ou 3, pour lequel l'appareil d'évacuation par aspiration (40) présente une chambre d'évacuation par aspiration (52) qui entoure l'outil (31) au moins partiellement et est agencée en dessous du parcours de convoyeur (FS), par lequel les copeaux produits sont évacués par aspiration vers le bas vu depuis le parcours de convoyeur (FS).

5. Dispositif selon l'une quelconque des revendications 2 à 4, pour lequel le dispositif de convoyeur (10) présente au moins deux appareils de transport (11) s'étendant parallèlement l'un à l'autre qui sont reçus respectivement à l'aide d'un rouleau d'entraînement (12) et d'un rouleau de renvoi (13), et sont entraînés par au moins un moteur (14), dans lequel l'outil (31) est prévu entre les au moins deux appareils de transport (11), de préférence au milieu, et la zone d'aspiration (50) est formée de préférence autour de l'outil (31).

6. Dispositif selon l'une quelconque des revendications 2 à 5, pour lequel la zone d'aspiration (50) présente une pluralité de trous d'aspiration (56) et est agencée de préférence entre l'au moins un appareil de transport (11) et l'outil (31).

7. Dispositif selon l'une quelconque des revendications précédentes, pour lequel l'appareil d'évacuation par aspiration (40) et la zone d'aspiration (50) sont reliés en écoulement parallèlement l'un à l'autre, en particulier par le biais d'une zone d'interface de dépression commune, en particulier section de raccordement (53), à un dispositif de dépression (80).

8. Dispositif selon l'une quelconque des revendications 2 à 7, comprenant en outre un dispositif de retenue (90) pour la retenue et éventuellement le pressage supplémentaire des pièces (W) contre le(s) appareil(s) de transport (11), dans lequel le dispositif de retenue (90) présente en particulier plusieurs rouleaux (91) agencés dans le sens de transport (X) les uns derrière les autres, ou est réalisé à partir de courroies, rails ou similaires.

9. Dispositif selon l'une quelconque des revendications 2 à 8, pour lequel le(s) appareil(s) de transport (11) est/sont réalisé(s) comme chaîne ou courroie dentée, en particulier courroie dentée qui consiste en la zone de la surface de contact avec les pièces (W) de caoutchouc naturel, de caoutchouc de silicone ou d'un matériau correspondant avec un coefficient de friction élevé.

10. Dispositif selon l'une quelconque des revendications précédentes, pour lequel le dispositif d'usinage (30) est réalisé comme un dispositif de coupe (30) avec une lame de scie (31).

11. Dispositif selon l'une quelconque des revendications 2 à 10, comprenant en outre un bâti de base (70) pour la réception du dispositif de convoyeur (10), du dispositif d'usinage (30), de l'appareil d'évacuation par aspiration (40) et de la zone d'aspiration (50) ou des zones d'aspiration (50), qui est réalisé en dessous du dispositif de convoyeur (10) sous la forme d'un boîtier de caisson (75) qui présente une cloison étanche d'entrée (71), une cloison étanche de sortie (73) et une cloison étanche (72) arrière, dans lequel
la cloison étanche d'entrée (71) forme conjointement avec une tôle de recouvrement (74) d'une/de la chambre d'évacuation par aspiration (52) et des parois extérieures (76) du boîtier de caisson (75) une chambre d'aspiration d'entrée (54),
la cloison étanche de sortie (73) forme conjointement avec la tôle de recouvrement (74) de la chambre d'évacuation par aspiration (52), de la cloison étanche (72) arrière et les parois extérieures (76) du boîtier de caisson (75) une chambre d'aspiration de sortie (55),
la chambre d'évacuation par aspiration (52) est ouverte vers le bas dans le boîtier de caisson (75), par quoi sont réalisées trois chambres d'aspiration (52, 54, 55) ouvertes communiquant les unes avec les autres, lesquelles peuvent être alimentées en dépression au moyen de la zone d'interface de dépression commune, en particulier la section de raccordement (53) qui est prévue sur une paroi extérieure (76) du boîtier de caisson (75).

12. Dispositif selon la revendication 11, pour lequel la zone d'interface de dépression, en particulier la section de raccordement (53) est circulaire, et est de préférence prévue dans la zone inférieure d'une paroi extérieure (76) du boîtier de caisson (75).

13. Dispositif selon la revendication 11 ou 12, pour lequel la cloison étanche d'entrée (71) et la cloison étanche de sortie (73) sont reçues dans le boîtier de caisson (75) de sorte qu'elles soient pivotantes respectivement autour d'un axe de telle manière que l'orientation des deux parois étanches (71, 73) puisse être variée l'une par rapport à l'autre, par quoi le rapport d'air d'aspiration peut être varié entre les trois chambres d'aspiration (52, 54, 55).

14. Dispositif selon l'une quelconque des revendications précédentes, pour lequel la zone d'aspiration (50) ou les zones d'aspiration (58, 59) est/sont réalisée(s) par des tôles de recouvrement (51) du boîtier de caisson (75) qui présentent la pluralité de trous d'aspiration (56) et/ou la zone d'aspiration (50) ou les zones d'aspiration (58, 59) est/sont réalisée(s) comme caisson(s) d'aspiration (57) terminés, en particulier comme tube(s) d'aspiration.

15. Procédé d'usinage par enlèvement de copeaux de pièces (W), de préférence de pièces (W) en forme de plaque, en particulier de pièces (W) qui consistent au moins partiellement en du bois, des matériaux dérivés du bois, de la matière plastique, de l'aluminium, de la tôle ou une combinaison de ceux-ci, présentant :
l'aspiration de la pièce (W) pendant un usinage par enlèvement de copeaux, dans lequel la pièce est transportée pendant l'usinage par enlèvement de copeaux,
l'usinage par enlèvement de copeaux de la pièce (W),
l'évacuation par aspiration des copeaux produits lors de l'usinage par enlèvement de copeaux,
dans lequel une évacuation par aspiration des copeaux et une aspiration de la pièce (W) sont réalisées par une dépression fournie au moyen d'une zone d'interface de dépression commune, en particulier d'une section de raccordement (53).
